# EUROPÄISCHE PATENTANMELDUNG

(11) **EP 4 851 990 A1**
(43) Veröffentlichungstag der Anmeldung: **09.12.2026**
(21) Anmeldenummer: 26178541.4
(22) Anmeldetag: 13.05.2026
(51) Int. Cl.: G10L 17/00, G10L 25/51

(54) **VERFAHREN UND SYSTEM ZUM ERKENNEN EINER GEFÄHRDUNGSSITUATION IM UMFELD EINES HAUSHALTSGERÄTES**

(30) Priorität: 04.06.2025 LU 601909
(71) Anmelder: Miele & Cie. KG, 33332 Gütersloh (DE)
(72) Erfinder: Carsten, Daniel, 33615 Bielefeld (DE); Stingl, Claudia, 33332 Gütersloh (DE); Ewerszumrode, Jan, 33442 Herzebrock-Clarholz (DE)

(57) **Zusammenfassung**

Die Erfindung betrifft ein Verfahren und sein System (300) zum Erkennen einer Gefährdungssituation im Umfeld eines Haushaltsgerätes (200), umfassend: Erfassen (S1) von Audiodaten aus dem Umfeld des Haushaltsgerätes (200), wobei die Audiodaten gesprochene Sprache, Schreie und/oder andere akustische Aktionen und/oder Reaktionen umfassen; Verarbeiten (S2) der Audiodaten mittels eines maschinellen Lernmodells (202), insbesondere eines generativen Sprachmodells (204), zur Ermittlung eines Kontexts; und Einleiten (S3) mindestens einer Gerätefunktion (206) auf Basis des ermittelten Kontexts zur Reaktion auf die erkannte Gefährdungssituation.

## Beschreibung

Die Erfindung betrifft die Hausgerätetechnik mit besonderem Fokus auf sicherheitsrelevante Bedienkonzepte und nutzerspezifische Zugriffskontrollen. Insbesondere betrifft die Erfindung ein Verfahren sowie ein System zum Erkennen einer Gefährdungssituation im Umfeld eines Haushaltsgerätes.

Hausgeräte wie Öfen, Herde oder Mikrowellen sind oftmals Bestandteile moderner Küchen und ermöglichen eine effiziente und komfortable Zubereitung von Speisen. Im familiären Alltag, insbesondere bei Haushalten mit kleinen Kindern, entstehen jedoch besondere Anforderungen an die sichere Bedienbarkeit dieser Geräte.

Gerade während des Kochens kann es zu stressigen Situationen kommen, wenn Kinder unbeaufsichtigt in die Küche gelangen, die Aufmerksamkeit der Eltern beanspruchen oder sogar versuchen, ein Hausgerät eigenständig zu bedienen. Dies kann nicht nur den Kochprozess stören, sondern birgt auch erhebliche Gefahren für die Kinder und Eltern, etwa durch heiße Oberflächen oder bewegliche Teile.

Aus diesem Grund sind Hausgeräte häufig mit Kindersicherungen ausgestattet, die entweder mechanisch oder elektrisch funktionieren. Mechanische Sicherungen beruhen auf speziellen Verschlüsselungen, die für Kinder schwer zu öffnen sind oder deren Funktionsweise sie nicht ohne Weiteres durchschauen. Elektrische Sicherungen hingegen nutzen beispielsweise lange Tastendrücke, Tastenkombinationen, PIN-Eingaben oder Muster zur Entriegelung; ähnlich wie bei Smartphones.

Mit fortschreitender Technik werden zunehmend auch biometrische Methoden in Erwägung gezogen, um die Nutzung von Hausgeräten auf autorisierte Personen zu beschränken. Eine Möglichkeit besteht darin, den Benutzer mittels Sprachbedienung zu identifizieren und durch Stimmanalyse zu authentifizieren. Diese Art der Benutzeridentifikation eröffnet Wege für eine komfortable, zugleich aber sichere Steuerung von Hausgeräten, indem sie einerseits den Zugang für Kinder verhindert und andererseits den berechtigten Nutzern eine intuitive Bedienung ermöglicht.

Auch wenn bereits Ansätze zur Kindersicherung bekannt sind, besteht weiterhin Entwicklungspotenzial. Der Erfindung stellt sich somit das Problem, ein dahingehend verbessertes Verfahren und System bereitzustellen.

Erfindungsgemäß wird dieses Problem durch ein Verfahren mit den Merkmalen des Patentanspruchs 1 gelöst. Ferner wird dieses Problem durch ein System mit den Merkmalen des Patentanspruchs 12 gelöst.

Vorteilhafte Ausgestaltungen und Weiterbildungen der Erfindung ergeben sich aus den nachfolgenden Unteransprüchen.

Demgemäß wird ein Verfahren zum Erkennen einer Gefährdungssituation im Umfeld eines Haushaltsgerätes vorgeschlagen. Das Verfahren umfasst die Schritte: insbesondere zumindest temporäres Erfassen von Audiodaten aus dem Umfeld des Haushaltsgerätes, wobei die Audiodaten gesprochene Sprache, Schreie und/oder andere akustische Aktionen und/oder Reaktionen umfassen; Verarbeiten der Audiodaten mittels eines maschinellen Lernmodells, insbesondere eines generativen Sprachmodells, zur Ermittlung eines Kontexts; und Einleiten mindestens einer Gerätefunktion auf Basis des ermittelten Kontexts zur Reaktion auf die erkannte Gefährdungssituation.

Vorzugsweise umfasst die Gruppe geeigneter Haushaltsgeräte einen Backofen, da hier durch heiße Oberflächen und offene Türen eine erhebliche Verletzungsgefahr bestehen kann. Ein Herd, insbesondere mit Elektro- oder Induktionskochfeld, wird vorzugsweise überwacht, um unbeabsichtigtes Einschalten und/oder Überhitzung rechtzeitig zu erkennen. Eine Mikrowelle eignet sich vorzugsweise zur Gefährdungserkennung bei unsachgemäßer Nutzung. Ein Geschirrspüler sollte vorzugsweise berücksichtigt werden, da heiße Dämpfe beim Öffnen oder das Entnehmen von Reinigungsmitteln ein Risiko für Kinder darstellen. Auch eine Waschmaschine ist vorzugsweise zu überwachen, da bewegte Teile und/oder heiße Waschgänge während des Betriebs Gefahren bergen. Auch ein Dampfgarer oder Tellerwärmer ist aufgrund der Verbrennungsgefahr zu überwachen. Auch andere Haushaltsgeräte können, wie vorliegend beschrieben, überwacht und in ihrer Funktion gesteuert werden, sodass die Auflistung hier nicht einschränkend zu verstehen ist.

Vorzugsweise basiert das maschinelle Lernmodell auf einer tiefen neuronalen Netzwerkarchitektur, insbesondere in Form eines Transformer-Modells, das eine sequenzielle Verarbeitung komplexer Audiodaten und Sprachinhalte erlaubt. Das maschinelle Lernmodell (kurz auch: Modell) wird vorzugsweise durch überwachte oder halbüberwachte Lernverfahren trainiert, wobei annotierte Datensätze verwendet werden, die typische Alltagssituationen mit akustischen Signalen wie Sprache, Schreien, Weinen, plötzlichen Geräuschen und/oder Signalwörtern umfassen können. Zusätzlich können vorzugsweise synthetisch generierte Szenarien und/oder augmentierte Audiodaten in das Training einbezogen werden, um die Robustheit des Modells gegenüber variierenden Umgebungsgeräuschen zu erhöhen. Für eine verbesserte Kontextinterpretation wird das Modell vorzugsweise auch mit Dialogdaten trainiert, etwa aus simulierten Haushaltsinteraktionen, einschließlich natürlicher Sprachwechselwirkungen zwischen Erwachsenen und Kindern. Die Modellstruktur umfasst vorzugsweise spezialisierte Eingabeschichten für Roh-Audio, Vorverarbeitungseinheiten für Feature-Extraktion (z. B. Mel-Frequenz-Spektralanalyse) und/oder Klassifikations- und Sequenzanalyse-Module zur Kontext- und Intent-Erkennung. In einer weiteren Ausgestaltung kann das maschinelle Lernmodell vorzugsweise multimodal und/oder auch multilingual ausgelegt sein, sodass zusätzlich mehrsprachige Eingaben und/oder visuelle Eingaben aus einer bevorzugten Kameraeinheit in die Entscheidungsfindung einfließen können, um situationsspezifische Reaktionen noch genauer abzustimmen.

Die Erfindung beschäftigt sich mit der Erkennung eines Kindes in der Nähe eines Hausgerätes und/oder der Erkennung einer Stresssituation und/oder der Sicherung und/oder der Ablenkung und dem interaktiven Lernen mittels Generativer KI und Kontexterkennung. Durch die vorliegende Erfindung kann erkannt werden, dass ein Kind während eines Kochprozesses in die Küche kommt, und/oder dass es zu einer Stresssituation in der Peripherie des Haushaltsgerätes kommt. Vorliegend kann eine derartige Situation dann vorzugsweise durch ein gezieltes und vorzugsweise auch kontextspezifisches Ablenken des Kindes entschärft und/oder aufgelöst werden. So können Eltern für einen Kochprozess die Haushaltsgeräte in der Küche entsperren. Gleichzeitig haben sie die Sicherheit, dass im Falle einer Stresssituation die Hausgeräte selbstständig reagieren und sich ggf. abschalten oder zumindest in einen betriebssicheren Zustand begeben.

In einem weiteren Aspekt wird vorgeschlagen, dass die Gefährdungssituation eine potenzielle oder tatsächliche Gefährdung einer vulnerablen Person, insbesondere eines Kindes oder einer pflegebedürftigen Person, umfasst.

Die Gefährdungssituation kann vielschichtig und/oder vielseitig sein. Die Gefährdungssituation kann beispielsweise durch ein plötzliches Eindringen der vulnerablen bzw. schutzbedürftigen Person in die Peripherie des Haushaltsgerätes hervorgerufen werden, ohne dass damit eine konkrete gefährdende Handlung verbunden sein muss. Befindet sich beispielsweise mindestens ein Elternteil in einem Kochprozess, kann grundsätzlich eine Kindersicherung aktiviert sein, die beispielsweise einen Sprachassistenten, zum Beispiel aufweisend ein Mikrofon, aktiviert, der sämtliche Audiodaten aus der Umgebung erfasst. Dies kann beispielsweise so lange erfolgen, bis ein Kochprozess beendet ist. Über die Erfassung der Audiodaten kann das maschinelle Lernmodell dann vorzugsweise den Kontext erkennen, indem das maschinelle Lernmodell, vorzugsweise ein großes Sprachmodell, eine Sprachezu-Text-Konversion durchführt und die gesprochene Sprache nach ihrem Wortsinngehalt und/oder ihrer Annotation und/oder ihrer Betonung und/oder ihrer Aussprache analysiert.

Kommt beispielsweise ein Kind in eine Küche, kann es zu unterschiedlichen Dialogen kommen. Das Kind könnte bereits vor einem Haushaltsgerät stehen und anfangen zu sprechen. Dem Elternteil könnte das Kind auffallen und könnte das Kind darauffolgend ansprechen. Aus dem gesprochenen Dialog kann das maschinelle Lernmodell vorzugsweise erkennen, dass das Kind anwesend ist und sich in der Nähe eines Haushaltsgerätes aufhält. Das maschinelle Lernmodell kann aus dem Kontext vorzugsweise erkennen, dass es sich um eine Gefährdungssituation und/oder um eine Stresssituation handeln könnte, in der die Eltern versuchen, das Kind davon abzuhalten, das Haushaltsgerät zu bedienen, oder das Kind aus dem Gefahrenbereich des Haushaltsgerätes herauszubewegen.

In einem weiteren Aspekt wird vorgeschlagen, dass die Ermittlung des Kontexts ferner durch eine Spracherkennung mittels Speech-to-Text-Verfahren und/oder durch eine Audiomustererkennung für charakteristische Gefährdungslaute, insbesondere Schreie, Weinen oder lautes Rufen, erfolgt.

Die Ermittlung des Kontexts erfolgt vorzugsweise zusätzlich zur Analyse durch das maschinelle Lernmodell durch eine Spracherkennung, bei der gesprochene Sprache automatisch in Text umgewandelt wird. Ein Speech-to-Text-Verfahren dient vorzugsweise dazu, semantische Inhalte der Sprache auszulesen, um so beispielsweise Aussagen, Befehle und/oder Hilferufe als Teil einer Gefährdungssituation zu interpretieren. Das Verfahren basiert vorzugsweise auf akustischen Modellen, die Laute in Buchstabenfolgen umwandeln, und Sprachmodellen, die auf Wortwahrscheinlichkeiten beruhen. Alternativ oder ergänzend wird vorzugsweise eine Audiomustererkennung eingesetzt, um charakteristische akustische Signale wie Schreie, Weinen und/oder lautes Rufen als Indikatoren für eine mögliche Gefahr zu erkennen. Diese Audiomustererkennung arbeitet vorzugsweise auf Basis trainierter Klassifikatoren, die wiederkehrende Geräuschsignaturen automatisch identifizieren und/oder kategorisieren. Durch die Kombination dieser Verfahren wird vorzugsweise die Erkennungsgenauigkeit erhöht, da sowohl sprachliche als auch nichtsprachliche akustische Signale in die Kontextermittlung einfließen. Dies ermöglicht vorzugsweise eine feinfühlige und differenzierte Bewertung der Umgebungsakustik zur frühzeitigen Identifikation von Situationen, in denen ein Eingreifen des Haushaltsgeräts erforderlich ist.

In einem weiteren Aspekt wird vorgeschlagen, dass die Kontextermittlung durch eine, insbesondere visuelle, Präsenzdetektion im Umfeld des Haushaltsgerätes unterstützt wird, insbesondere mittels einer Kameraeinheit.

Die Präsenzdetektion im Umfeld des Haushaltsgeräts erfolgt vorzugsweise durch sensorbasierte Erfassung der Anwesenheit von Personen in einem definierten räumlichen Bereich rund um das Gerät. Hierzu wird vorzugsweise eine Kameraeinheit, ein Infrarotsensor, ein Bewegungssensor, ein kapazitiver Näherungssensor und/oder eine Kombination daraus verwendet. So können Bewegungen, Körperformen und/oder Wärmesignaturen identifiziert werden. Die Detektion dient vorzugsweise dazu, zu erkennen, ob sich eine Person in der Nähe des Haushaltsgeräts aufhält, um kontextabhängige Funktionen wie Sicherheitsmaßnahmen oder Nutzerinteraktionen bei Bedarf zu aktivieren oder deaktivieren. Die räumliche Begrenzung des Überwachungsbereichs wird vorzugsweise so festgelegt, dass Fehlalarme durch benachbarte Aktivitäten außerhalb der unmittelbaren Gefahrenzone vermieden werden.

In einem weiteren Aspekt wird vorgeschlagen, dass die Präsenzdetektion mit einem Authentifizierungs- und/oder Identifizierungsmechanismus verknüpft ist, um autorisierte Nutzer von nicht autorisierten Personen zu unterscheiden.

Die Präsenz eines Nutzers kann vorzugsweise auch in Kombination mit Identifizierung und/oder Authentifizierung genutzt werden, um festzustellen, ob es sich um einen berechtigten Benutzer oder eine vulnerable Person handelt. Dadurch wird vorzugsweise eine adaptive Steuerung des Haushaltsgeräts möglich, die auf Schutzbedürfnisse und auch auf Bedienabsichten Acht nimmt. Die Identifizierung und/oder Authentifizierung können beispielsweise über Gesichtserkennung und/oder Spracherkennung und/oder Stimmenerkennung und/oder Augenerkennung erfolgen. Die Identifizierung und/oder Authentifizierung kann auch durch Identifikation der Person über ein smartes Device (z.B. Smartphone oder Tablet) bzw. ein Wearable (z. B.: Smartwatch, Smart Ring) erfolgen.

In einem weiteren Aspekt wird vorgeschlagen, dass als Gerätefunktion mindestens eine der folgenden Reaktionen ausgelöst wird: Aktivierung eines betriebssicheren Modus, Aktivierung einer Bediensicherung, Einblendung eines Ablenkungsinhalts.

Die von dem maschinellen Lernmodell erkannte Situation leitet vorzugsweise verschiedene, jedoch mindestens eine, optional auch einstellbare, Funktion des mindestens einen Haushaltsgerätes ein. Das Haushaltsgerät kann eine Gerätesperre aktivieren, die ein Kind davon abhält, eine Gerätetür zu öffnen und/oder das Gerät zu bedienen. Soll ein Kind abgelenkt oder von dem Haushaltsgerät weggeführt werden, kann auf einem Gerätedisplay auch ein Ablenkungsmanöver gestartet werden. Das Gerätedisplay kann, auch in Verbindung mit einer Sprachausgabe, das Kind mit interaktiven Einblendungen ablenken. Das Kind geht dann beispielsweise zu einem Bildschirm an dem Haushaltsgerät oder in der Peripherie des Haushaltsgerätes und interagiert mit einer Anwendung. Die Anwendung kann einen einfachen Dialog, das Einblenden von ansprechenden Bildern und/oder einem Video umfassen. Über die Anwendung kann dem Kind beispielsweise auch Wissen vermittelt werden. Beispielsweise kann die Anwendung dem Kind erklären, warum es nicht so dicht an ein heißes Kochfeld herantreten soll. Das Haushaltsgerät kann auch in einen betriebssicheren Modus umschalten, in dem die Bedienung durch das Kind keine Funktionen auslöst, dem Kind aber erklärt wird, was die jeweilige Bedienung auslösen würde. Ein solcher Modus bzw. allgemein eine solche Ablenkung ist durch den Nutzer dann (wieder) abschaltbar, sodass dieser das Haushaltsgerät danach wie gewohnt bedienen kann.

In einem weiteren Aspekt wird vorgeschlagen, dass der Ablenkungsinhalt einen, insbesondere interaktiven, Videoinhalt und/oder Audioinhalt und/oder Bildinhalt umfasst, der durch eine Ausgabe und/oder Anzeigeeinheit des Haushaltsgerätes ausgebbar ist.

Im Falle eines Verlassens eines Raumes durch den Nutzer kann das Haushaltsgerät auch in einen abgesicherten Modus versetzt werden, falls sich eine vulnerable Person nähert. Wenn die vulnerable Person beispielsweise in einem vorbestimmten Zeitintervall oder bis zu einer vorbestimmten Distanz vom Haushaltsgerät keine Äußerung von sich gegeben hat, kann das maschinelle Lernmodell vorzugsweise darauf reagieren. Eine solche Reaktion wäre durch ein Einschalten einer Kindersicherung möglich, oder durch ein automatisches Einschalten über eine Abwesenheitserkennung, z.B. durch eine Präsenzdetektion.

In einem weiteren Aspekt wird vorgeschlagen, dass die Verarbeitung der Audiodaten in einem lokal implementierten Modell oder in einer datenschutzkonformen Cloud-Umgebung erfolgt, wobei insbesondere Mittel zur Einhaltung geltender Datenschutzbestimmungen vorgesehen sind.

Durch diese Ausgestaltung kann ein ungewünschtes Abwandern von personenbezogenen Daten und/oder Sprachinhalten verhindert werden, was geltenden Datenschutzbestimmungen gerecht wird. Ein lokal implementiertes Modell ist vorzugsweise ein maschinelles Lernmodell, das vollständig auf der Hardware des Haushaltsgeräts oder einer damit verbundenen lokalen Steuereinheit betrieben wird, ohne dass eine Datenübertragung an externe Server erfolgt. Dieses Modell wird vorzugsweise direkt auf einem eingebetteten Prozessor, einem Mikrocontroller oder einem lokal angebundenen Rechner ausgeführt. Die Verarbeitung sensibler Daten erfolgt vorzugsweise ausschließlich vor Ort, wodurch das Risiko unerwünschter Datenweitergabe minimiert wird. Eine datenschutzkonforme Cloud-Umgebung beschreibt vorzugsweise eine verteilte IT-Infrastruktur, bei der die Verarbeitung des Modells auf externen Servern erfolgt, die besonderen Anforderungen an Datensicherheit, Zugriffskontrolle und Rechtskonformität unterliegen. In einer solchen Umgebung werden Audiodaten vorzugsweise verschlüsselt übertragen, pseudonymisiert und/oder anonymisiert verarbeitet und ausschließlich auf zertifizierten Servern gespeichert oder ausgewertet.

In einem weiteren Aspekt wird vorgeschlagen, dass das maschinelle Lernmodell kontinuierlich oder ereignisbasiert aktiviert wird, abhängig von einer vorher definierten Triggerbedingung.

Das maschinelle Lernmodell wird vorzugsweise so betrieben, dass es entweder dauerhaft im Hintergrund arbeitet oder nur bei bestimmten Ereignissen aktiviert wird, wodurch eine flexible Anpassung an die jeweiligen Anforderungen der Anwendung ermöglicht wird. Eine kontinuierliche Aktivierung bedeutet vorzugsweise, dass das maschinelle Lernmodell in Echtzeit alle eingehenden Daten analysiert, was eine sofortige Reaktion auf Gefährdungssituationen erlaubt und somit ein hohes Maß an Überwachung sicherstellt. Eine ereignisbasierte Aktivierung erfolgt vorzugsweise nur dann, wenn bestimmte Bedingungen erfüllt sind, wodurch Rechenressourcen gespart und die Energieeffizienz erhöht werden kann. Ein maschinelles Lernmodell ist vorzugsweise ein algorithmisches System, das auf Trainingsdaten basiert, um Muster zu erkennen und daraus Kontexte abzuleiten, wobei insbesondere generative Sprachmodelle auch dialogfähige Reaktionen erzeugen können. Die Aktivierung erfolgt vorzugsweise abhängig von vorher definierten Triggerbedingungen, also spezifischen Auslösern wie akustischen Reizen, Bewegungen oder Nutzereingaben, die im System festgelegt wurden. Durch diese bedarfsgerechte Steuerung wird vorzugsweise eine optimierte Balance zwischen Reaktionsschnelligkeit und Ressourcenschonung erreicht.

In einem weiteren Aspekt wird vorgeschlagen, dass im Fall einer erkannten Gefährdungssituation ein akustisches oder optisches Warnsignal ausgegeben wird.

Im Fall einer erkannten Gefährdungssituation wird vorzugsweise eine Reaktion ausgelöst, die sich durch eine akustische oder optische Warnung äußert, wodurch Personen in der Nähe unmittelbar auf eine potenzielle Gefahr hingewiesen werden. Ein akustisches Warnsignal besteht vorzugsweise aus einem Ton, einer Sprachausgabe oder einem Alarm, der über Lautsprecher wiedergegeben wird und für eine schnelle akustische Wahrnehmung sorgt, auch wenn der Blick nicht auf das Gerät gerichtet ist. Ein optisches Warnsignal umfasst vorzugsweise eine Lichtanzeige, ein Blinksignal oder eine farbliche Markierung auf einem Display, wodurch die Aufmerksamkeit visuell gelenkt wird, insbesondere in lärmintensiven Umgebungen. Durch die Ausgabe solcher Signale wird vorzugsweise die Reaktionszeit der Nutzer verkürzt, sodass schnell auf die erkannte Situation reagiert werden kann, was die Sicherheit im Haushaltsumfeld erhöht. Die Signale können vorzugsweise auch kombiniert werden, um verschiedene Nutzerpräferenzen oder Einschränkungen (z. B. Hör- oder Sehbeeinträchtigung) zu berücksichtigen.

In einem weiteren Aspekt wird vorgeschlagen, dass ein Benutzer über eine Benachrichtigung auf einem externen Endgerät, insbesondere einem Smartphone oder Smart Speaker, über die erkannte Gefährdungssituation und die eingeleiteten Maßnahmen informiert wird.

Ein Benutzer wird vorzugsweise über ein vernetztes System über eine erkannte Gefährdungssituation informiert, um ortsunabhängig und in Echtzeit auf kritische Ereignisse reagieren zu können. Die Benachrichtigung erfolgt vorzugsweise über ein externes Endgerät, wobei unter einem externen Endgerät insbesondere ein mobiles Kommunikationsgerät wie ein Smartphone oder ein sprachfähiges Gerät wie ein Smart Speaker zu verstehen ist, das drahtlos mit dem Haushaltsgerät verbunden oder verbindbar ist. Die übermittelte Information umfasst vorzugsweise sowohl eine Beschreibung der erkannten Gefährdung als auch Details zu automatisch eingeleiteten Maßnahmen, wodurch Transparenz und Kontrolle durch den Benutzer erhöht werden. Durch diese Ferninformation wird vorzugsweise ein Höchstmaß an Überwachung und Eingreifmöglichkeit gewährleistet, auch wenn sich der Nutzer nicht direkt im Umfeld des Geräts befindet. Dies trägt vorzugsweise zur Verbesserung der Aufsichtspflicht und zur Deeskalation potenziell gefährlicher Situationen bei.

Weiterhin wird ein System zum Erkennen einer Gefährdungssituation im Umfeld eines Haushaltsgerätes vorgeschlagen. Das System umfasst eine Audioerfassungseinheit zur zumindest temporären Aufnahme von Audiodaten; eine Verarbeitungseinheit mit einem maschinellen Lernmodell, insbesondere einem generativen Sprachmodell, zur Kontextermittlung aus den Audiodaten; und eine Steuereinheit zum Einleiten mindestens einer Gerätefunktion auf Basis des ermittelten Kontexts zur Reaktion auf eine erkannte Gefährdungssituation.

Die Audioerfassungseinheit und/oder die Verarbeitungseinheit und/oder die Steuereinheit kann/können als gemeinsame Einheit oder zumindest teilweise als getrennte Einheiten, auch zumindest teilweise dezentral oder zentral, ausgebildet sein. Die Audioerfassungseinheit und/oder die Verarbeitungseinheit und/oder die Steuereinheit kann/können softwareseitige und/oder hardwareseitige Anteile und/oder Komponenten aufweisen. Die Audioerfassungseinheit und/oder die Verarbeitungseinheit und/oder die Steuereinheit kann/können zumindest teilweise in einer Server- oder Cloud-Umgebung eingebettet sein. Die Audioerfassungseinheit und/oder die Verarbeitungseinheit und/oder die Steuereinheit kann/können auch unmittelbar mit dem Haushaltsgerät verbindbar sein. Die Audioerfassungseinheit und/oder die Verarbeitungseinheit und/oder die Steuereinheit kann/können auch in das Haushaltsgerät integrierbar sein. Die Audioerfassungseinheit und/oder die Verarbeitungseinheit und/oder die Steuereinheit kann/können auch in einem externen Gerät, beispielsweise einem Smart-Lautsprecher und/oder Bildschirm und/oder Personal-Assistent, ausgebildet sein.

Die für das Verfahren gemachten Ausführungen gelten für das beschriebene System entsprechend und umgekehrt.

In einem weiteren Aspekt wird vorgeschlagen, dass das System ferner Mittel zur, insbesondere visuellen, Präsenzdetektion, und/oder Mittel zur Authentifizierung und/oder Benutzeridentifikation und/oder Mittel zur Ausgabe eines Ablenkungsinhalts aufweist.

Die Mittel zur, insbesondere visuellen, Präsenzdetektion können eine Kameraeinheit umfassen. Die Mittel zur Authentifizierung und/oder Benutzeridentifikation können durch eine Recheneinheit der Kameraeinheit und/oder durch eine dezentrale Recheneinheit, wie einen Server oder eine Cloud, ausgebildet sein. Die Mittel zur Ausgabe eines Ablenkungsinhalts können einen Bildschirm und/oder einen Lautsprecher und/oder ein Mikrofon und/oder einen Touch-Bildschirm und/oder eine Hologrammoberfläche und/oder ein Head-up-Display aufweisen.

Ferner wird ein Computerprogrammprodukt mit Programmcode vorgeschlagen, der auf einem Computer oder einer Steuereinheit ausführbar ist und das vorliegende Verfahren ausführt, wenn das Programm auf dem Computer ausgeführt wird.

Ein Computerprogrammprodukt umfasst vorzugsweise einen ausführbaren Programmcode, der bei Ausführung auf einem Computer oder einer Steuereinheit die Schritte des beschriebenen Verfahrens realisiert. Der Programmcode ist vorzugsweise so strukturiert, dass er alle notwendigen Datenverarbeitungsschritte und Steuerbefehle zur Gefährdungserkennung und Gerätesteuerung umfasst. Ein Computer ist vorzugsweise eine universelle Recheneinheit, während eine Steuereinheit ein speziell für die Steuerung von Geräten ausgelegter Mikrocontroller oder Prozessor sein kann. Das Computerprogrammprodukt erlaubt vorzugsweise eine einfache Distribution, Aktualisierung und Wiederverwendung der Funktionalität auf unterschiedlichen Hardwareplattformen. Dadurch wird die Integration der Erkennung und Reaktion auf Gefährdungssituationen in bestehende oder neue Systeme vorzugsweise erleichtert und der Entwicklungsaufwand reduziert.

Ferner wird ein computerlesbares Speichermedium mit einem darauf gespeicherten Programmcode zur Durchführung des vorliegenden Verfahrens vorgeschlagen, wenn der Programmcode auf einem Computer oder einer Steuereinheit ausgeführt wird.

Ein computerlesbares Speichermedium ist vorzugsweise ein physischer oder virtueller Datenträger, auf dem der ausführbare Programmcode dauerhaft oder temporär gespeichert ist. Beispiele hierfür sind bevorzugt USB-Sticks, Festplatten, SSDs oder cloudbasierte Speichereinheiten, die vom Computer oder einer Steuereinheit ausgelesen werden können. Der gespeicherte Programmcode ist vorzugsweise so gestaltet, dass er bei Ausführung auf der Zielhardware die automatische Durchführung des Verfahrens zur Erkennung und Reaktion auf Gefährdungssituationen bewirkt. Durch die Bereitstellung auf einem Speichermedium kann das Verfahren vorzugsweise unabhängig von einer Onlineverbindung installiert und betrieben werden, was die Ausfallsicherheit erhöht und datenschutzkonforme Offline-Anwendungen unterstützt.

Ein Ausführungsbeispiel der Erfindung ist in den Zeichnungen rein schematisch dargestellt und wird nachfolgend näher beschrieben. Es zeigt
- Figur 1: ein schematisches Flussdiagramm eines Ausführungsbeispiels des vorliegenden Verfahrens;
- Figur 2: eine schematische Darstellung eines Ausführungsbeispiels des vorliegenden Systems;
- Figur 3: eine schematische Darstellung eines Ausführungsbeispiels des vorliegenden Systems; und
- Figur 4: eine schematische Darstellung eines Ausführungsbeispiels des vorliegenden Systems.

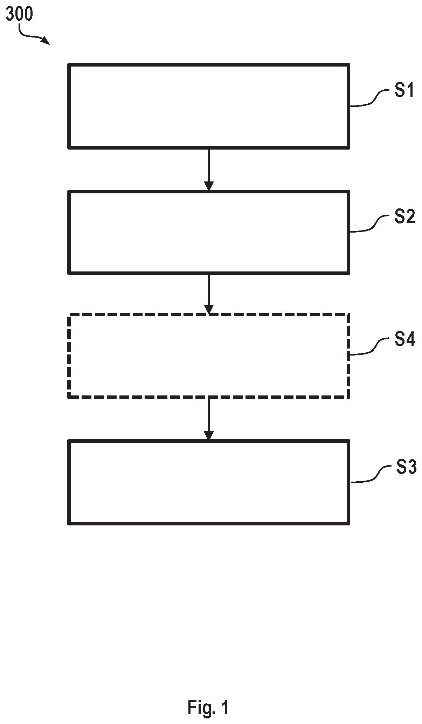

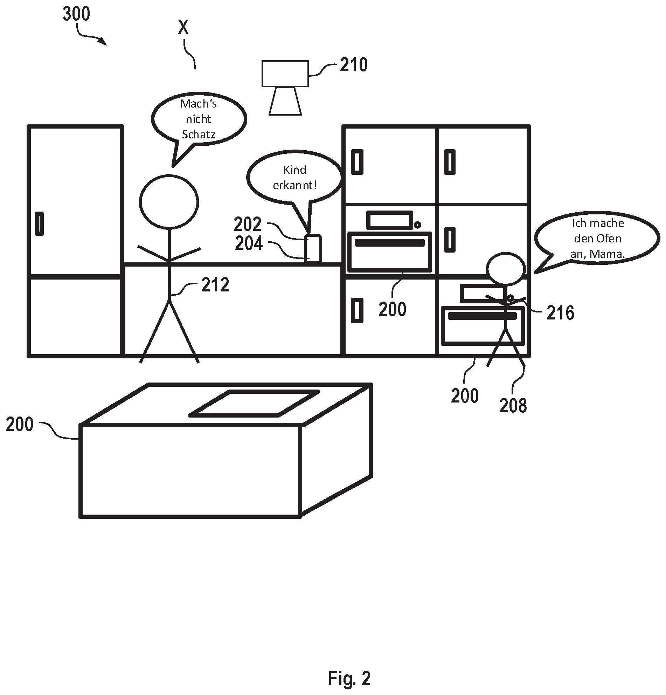

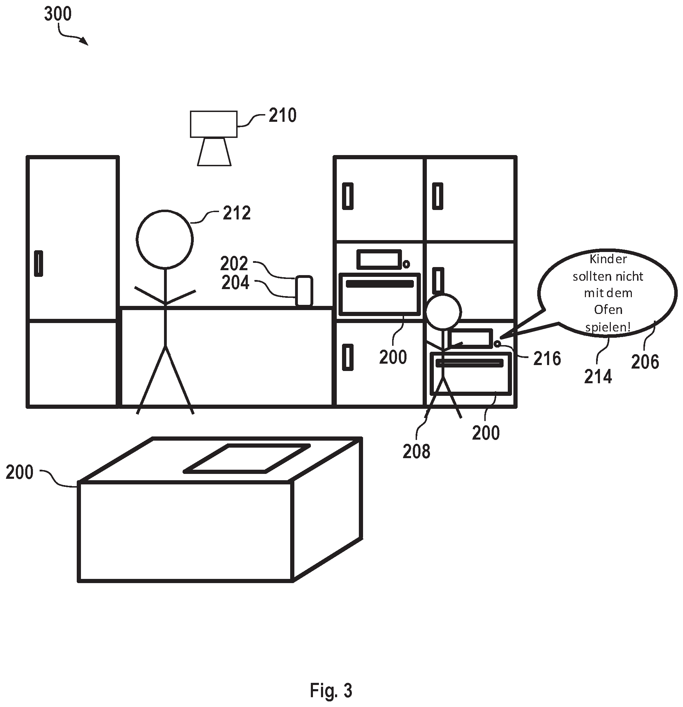

Figur 1 zeigt ein schematisches Flussdiagramm eines Verfahrens zum Erkennen einer Gefährdungssituation im Umfeld eines Haushaltsgerätes 200. Das Verfahren kann von einem System 300 ausgeführt werden, das im Kontext der Figuren 2 und 3 noch näher beschrieben wird.

In einem Schritt S1 erfolgt ein Erfassen von Audiodaten aus dem Umfeld des Haushaltsgerätes 200, wobei die Audiodaten gesprochene Sprache, Schreie und/oder andere akustische Aktionen und/oder Reaktionen umfassen können.

In einem Schritt S2 erfolgt ein Verarbeiten der Audiodaten mittels eines maschinellen Lernmodells 202, insbesondere eines generativen Sprachmodells 204, zur Ermittlung eines Kontexts. Die Ermittlung des Kontexts erfolgt durch eine Spracherkennung mittels Speech-to-Text-Verfahren und/oder durch eine Audiomustererkennung für charakteristische Gefährdungslaute, insbesondere Schreie, Weinen und/oder lautes Rufen. Das maschinelle Lernmodell 202 kann kontinuierlich oder ereignisbasiert aktiviert werden, insbesondere abhängig von einer vordefinierten Triggerbedingung.

In einem Schritt S3 erfolgt ein Einleiten mindestens einer Gerätefunktion 206 auf Basis des ermittelten Kontexts zur Reaktion auf die erkannte Gefährdungssituation. Die Gefährdungssituation kann eine potenzielle oder tatsächliche Gefährdung einer vulnerablen Person 208, insbesondere eines Kindes oder einer pflegebedürftigen Person, umfassen.

In einem bevorzugten Schritt S4, der nicht in der Abflogen der Schritte S1 bis S3 ausgeführt werden muss, sondern ein Zwischenschritt oder ein Unterschritt sein kann, kann ferner die Kontextermittlung durch eine, insbesondere visuelle, Präsenzdetektion im Umfeld des Haushaltsgerätes 200 unterstützt werden, insbesondere mittels einer Kameraeinheit 210. Diese Präsenzdetektion kann auch mit einem Authentifizierungs- und/oder Identifizierungsmechanismus verknüpft sein, um nur autorisierte Nutzer 212 von nicht autorisierten Personen zu unterscheiden.

Die in dem Schritt S3 eingeleitete mindestens eine Gerätefunktion 206 kann als eine der folgenden Reaktionen ausgelöst werden, nämlich eine Aktivierung eines betriebssicheren Modus, eine Aktivierung einer Bediensicherung, und/oder eine Einblendung eines Ablenkungsinhalts 214, wie in Figur 3 dargestellt. Der Ablenkungsinhalt 214 kann einen, insbesondere interaktiven, Videoinhalt und/oder Audioinhalt und/oder Bildinhalt umfassen, der durch eine Ausgabe und/oder Anzeigeeinheit 216 des Haushaltsgerätes 200 ausgebbar ist. Im Falle einer erkannten Gefährdungssituation kann auch ein akustisches oder optisches Warnsignal ausgegeben werden. Dabei kann der Nutzer 212 vorzugsweise über eine Benachrichtigung auf einem externen Endgerät (nicht gezeigt), insbesondere einem Smartphone oder Smart Speaker, über die erkannte Gefährdungssituation und die eingeleiteten Maßnahmen informiert werden.

Die Verarbeitung der Audiodaten kann vorliegend in einem lokal auf dem Haushaltsgerät 200 implementierten Modell oder in einer datenschutzkonformen Cloud-Umgebung erfolgen (nicht gezeigt), wobei insbesondere Mittel zur Einhaltung geltender Datenschutzbestimmungen vorgesehen sein können.

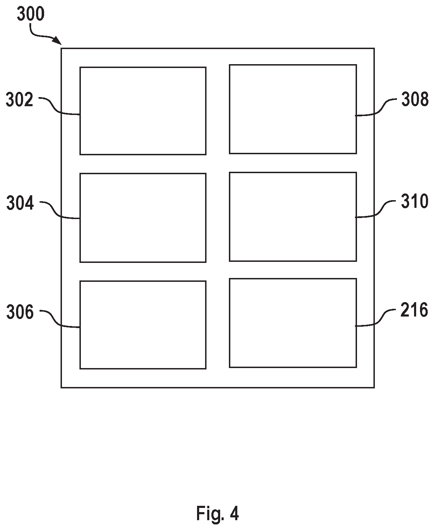

Das in den Figuren 2 bis 4 näher gezeigte System 300 zum Erkennen einer Gefährdungssituation im Umfeld des Haushaltsgerätes 200 umfasst beispielhaft eine Audioerfassungseinheit 302 zur zumindest temporären Aufnahme von Audiodaten. Ferner umfasst das System 300 eine Verarbeitungseinheit 304 mit dem maschinellen Lernmodell 202 zur Kontextermittlung aus den Audiodaten. Auch umfasst das System 300 eine Steuereinheit 306 zum Einleiten der mindestens einen Gerätefunktion 206 auf Basis des ermittelten Kontexts zur Reaktion auf eine erkannte Gefährdungssituation. Ferner kann das System 300 Mittel zur, insbesondere visuellen, Präsenzdetektion 308, und/oder Mittel zur Authentifizierung und/oder Benutzeridentifikation 310 und/oder Mittel zur Ausgabe, nämlich die Ausgabe und/oder Anzeigeeinheit, des Ablenkungsinhalts 214 aufweisen.

Aus Figur 2 geht beispielsweise eine Situation hervor, in der sich ein Nutzer 212 in einem Kochprozess befindet und dadurch abgelenkt ist. Dabei kann das mindestens eine Hausgerät 200 bereits für eine spätere Nutzung entsperrt sein, also ohne Kindersicherung sein. Es kommt nun beispielsweise die vulnerable Person 208, nämlich das Kind, in die Küche und möchte das mindestens eine Haushaltsgerät 200 bedienen. Der Nutzer 212 bemerkt dies, kann aber nicht einschreiten, da beispielsweise seine Hände bei der Zubereitung von Nahrungsmitteln schmutzig sind. Der Nutzer 212 versucht, das Kind verbal von einer Bedienung abzuhalten ("Mach's nicht, Schatz"). Durch das System 300 kann das Kind erkannt werden, was ggf. auch als Warnsignal (z.B. "Kind erkannt") an den Nutzer 212 ausgegeben werden kann. Das Kind kann beispielsweise anregen, eine Aktion mit dem mindestens einen Haushaltsgerät 200 ausführen zu wollen, beispielsweise durch die Aussage "Ich mache den Ofen an, Mama". Dies kann vorliegend kontextuell von dem System 300 erkannt werden, und dadurch die mindestens eine Gerätefunktion 206 des betreffenden Haushaltsgerätes 200 ausgelöst werden, wie dies in Figur 3 weiter zu entnehmen ist. Diese Gerätefunktion 206 kann beispielsweise in der Ausgabe eines Ablenkungsinhaltes 214 liegen, der beispielsweise über die Ausgabe- und/oder Anzeigeeinheit 216 an das Kind ausgegeben wird, vorliegend beispielsweise als "Kinder sollen nicht mit dem Ofen spielen!". Die Ausgabe- und/oder Anzeigeeinheit 216 kann dabei beispielsweise einen intelligenten Lautsprecher aufweisen. Das System 300, das auch in einem solchen intelligenten Lautsprecher umfasst sein kann, hat damit das Gespräch zwischen dem Nutzer 202 und der vulnerablen Person 208 als Stresssituation und/oder Gefährdungssituation kontextuell erkannt und eine Ablenkung für die vulnerable Person 208 gestartet. Ferner kann an dem Haushaltsgerät 200 noch eine Kindersicherung als weitere Gerätefunktion eingeschaltet werden, insbesondere zusätzlich dazu, dass das Kind abgelenkt wird.

Es versteht sich, dass das beschriebene System 300 nicht auf die Überwachung eines einzelnen Haushaltsgerätes 200 beschränkt ist, sondern vorzugsweise auf mehrere Haushaltsgeräte 200 gleichzeitig anwendbar ist. So können beispielsweise, wie in den Ausführungsbeispielen dargestellt, eine Kochinsel, ein Backofen, ein Dampfgarer und/oder ein Tellerwärmer gemeinsam in die Überwachung einbezogen werden.

Die in den Figuren gezeigten Darstellungen dienen vorzugsweise lediglich der Veranschaulichung und sind nicht einschränkend zu verstehen, weder hinsichtlich der Anzahl noch der Art der beteiligten Komponenten.

Der Ausdruck "mindestens ein" bzw. "mindestens eine" ist vorzugsweise als "eins oder mehrere" zu interpretieren, sodass sowohl Einzelgeräte als auch Gerätegruppen einbezogen sein können.

Ferner können vorzugsweise mehrere Gerätefunktionen 206 gleichzeitig oder in einer zeitlichen Abfolge ausgelöst werden, je nachdem, welche Maßnahmen zur Reaktion auf eine erkannte Gefährdungssituation erforderlich sind. Diese kombinierte oder sequenzielle Steuerung ermöglicht vorzugsweise eine ggf. auch abgestufte und somit höchst flexible Reaktion, die an die jeweilige Situation kontextuell angepasst werden kann.

### Bezugszeichenliste

- 200: Haushaltsgerät
- 202: maschinelles Lernmodell
- 204: generatives Sprachmodell
- 206: Gerätefunktion
- 208: vulnerable Person
- 210: Kameraeinheit
- 212: Nutzer
- 214: Ablenkungsinhalts
- 216: Ausgabe und/oder Anzeigeeinheit

- 300: System
- 302: Audioerfassungseinheit
- 304: Verarbeitungseinheit
- 306: Steuereinheit
- 308: Mittel zur, insbesondere visuellen, Präsenzdetektion
- 310: Mittel zur Authentifizierung und/oder Benutzeridentifikation

- S1: Erfassen von Audiodaten
- S2: Verarbeiten der Audiodaten
- S3: Einleiten mindestens einer Gerätefunktion
- S4: Präsenzdetektion im Umfeld des Haushaltsgerätes

## Patentansprüche

1. Verfahren zum Erkennen einer Gefährdungssituation im Umfeld eines Haushaltsgerätes (200), umfassend die Schritte:
Erfassen (S1) von Audiodaten aus dem Umfeld des Haushaltsgerätes (200), wobei die Audiodaten gesprochene Sprache, Schreie und/oder andere akustische Aktionen und/oder Reaktionen umfassen;
Verarbeiten (S2) der Audiodaten mittels eines maschinellen Lernmodells (202), insbesondere eines generativen Sprachmodells (204), zur Ermittlung eines Kontexts; und
Einleiten (S3) mindestens einer Gerätefunktion (206) auf Basis des ermittelten Kontexts zur Reaktion auf die erkannte Gefährdungssituation.

2. Verfahren nach Anspruch 1, wobei die Gefährdungssituation eine potenzielle oder tatsächliche Gefährdung einer vulnerablen Person (208), insbesondere eines Kindes oder einer pflegebedürftigen Person, umfasst.

3. Verfahren nach einem der vorhergehenden Ansprüche, wobei die Ermittlung des Kontexts ferner durch eine Spracherkennung mittels Speech-to-Text-Verfahren und/oder durch eine Audiomustererkennung für charakteristische Gefährdungslaute, insbesondere Schreie, Weinen oder lautes Rufen, erfolgt.

4. Verfahren nach einem der vorhergehenden Ansprüche, wobei die Kontextermittlung durch eine, insbesondere visuelle, Präsenzdetektion (S4) im Umfeld des Haushaltsgerätes (200) unterstützt wird, insbesondere mittels einer Kameraeinheit (210).

5. Verfahren nach Anspruch 4, wobei die Präsenzdetektion (S4) mit einem Authentifizierungs- und/oder Identifizierungsmechanismus verknüpft ist, um autorisierte Nutzer (212) von nicht autorisierten Personen zu unterscheiden.

6. Verfahren nach einem der vorhergehenden Ansprüche, wobei als Gerätefunktion (206) mindestens eine der folgenden Reaktionen ausgelöst wird: Aktivierung eines betriebssicheren Modus, Aktivierung einer Bediensicherung, Einblendung eines Ablenkungsinhalts (214).

7. Verfahren nach Anspruch 6, wobei der Ablenkungsinhalt (214) einen, insbesondere interaktiven, Videoinhalt und/oder Audioinhalt und/oder Bildinhalt umfasst, der durch eine Ausgabe und/oder Anzeigeeinheit (216) ausgebbar ist.

8. Verfahren nach einem der vorhergehenden Ansprüche, wobei die Verarbeitung der Audiodaten in einem lokal implementierten Modell oder in einer datenschutzkonformen Cloud-Umgebung erfolgt, wobei insbesondere Mittel zur Einhaltung geltender Datenschutzbestimmungen vorgesehen sind.

9. Verfahren nach einem der vorhergehenden Ansprüche, wobei das maschinelle Lernmodell (202) kontinuierlich oder ereignisbasiert aktiviert wird, abhängig von einer vordefinierten Triggerbedingung.

10. Verfahren nach einem der vorhergehenden Ansprüche, wobei im Fall einer erkannten Gefährdungssituation ein akustisches oder optisches Warnsignal ausgegeben wird.

11. Verfahren nach einem der vorhergehenden Ansprüche, wobei ein Nutzer (212) über eine Benachrichtigung auf einem externen Endgerät, insbesondere einem Smartphone oder Smart Speaker, über die erkannte Gefährdungssituation und die eingeleiteten Maßnahmen informiert wird.

12. System (300) zum Erkennen einer Gefährdungssituation im Umfeld eines Haushaltsgerätes (200), umfassend:
eine Audioerfassungseinheit (302) zur zumindest temporären Aufnahme von Audiodaten;
eine Verarbeitungseinheit (304) mit einem maschinellen Lernmodell (202), insbesondere einem generativen Sprachmodell (204), zur Kontextermittlung aus den Audiodaten;
eine Steuereinheit (306) zum Einleiten mindestens einer Gerätefunktion (206) auf Basis des ermittelten Kontexts zur Reaktion auf eine erkannte Gefährdungssituation.

13. System nach Anspruch 12, das ferner Mittel zur, insbesondere visuellen, Präsenzdetektion (308), und/oder Mittel zur Authentifizierung und/oder Benutzeridentifikation (310) und/oder Mittel zur Ausgabe eines Ablenkungsinhalts, insbesondere eine Ausgabe und/oder Anzeigeeinheit (216), aufweist.

14. Computerprogrammprodukt mit Programmcode, der auf einem Computer oder einer Steuereinheit ausführbar ist und das Verfahren nach einem der Ansprüche 1 bis 11 ausführt, wenn das Programm auf dem Computer ausgeführt wird.

15. Computerlesbares Speichermedium mit einem darauf gespeicherten Programmcode zur Durchführung des Verfahrens nach einem der Ansprüche 1 bis 11, wenn der Programmcode auf einem Computer oder einer Steuereinheit ausgeführt wird.
